# EUROPÄISCHE PATENTSCHRIFT

(11) **EP 2 423 107 B1**
(45) Veröffentlichungstag und Bekanntmachung des Hinweises auf die Patenterteilung: **20.03.2019**
(21) Anmeldenummer: 11178285.0
(22) Anmeldetag: 22.08.2011
(51) Int. Cl.: B64D 11/00, B64D 11/06, B64D 11/02

(54) **Anordnung zum Aufnehmen von Passagieren in einem Verkehrsmittel**
Arrangement for accommodating passengers in a transportation means
Agencement de réception de passagers dans un moyen de transport

(30) Priorität: 25.08.2010 DE 102010035375; 25.08.2010 US 377012 P
(43) Veröffentlichungstag der Anmeldung: 29.02.2012
(73) Patentinhaber: Airbus Operations GmbH, 21129 Hamburg (DE)
(72) Erfinder: Schliwa, Ralf, 21739 Dollern (DE); Strasdas, Maria, 21635 Jork (DE); Möller, Wolfgang, 25524 Itzehoe (DE)
(74) Vertreter: LKGLOBAL Lorenz & Kopf PartG mbB Patentanwälte

(56) Entgegenhaltungen:
- EP-A1- 1 803 645
- EP-A2- 2 052 706
- WO-A2-2010/120811
- DE-A1-102007 004 830
- DE-A1-102007 009 544
- DE-C1- 19 827 275
- US-A- 5 769 360
- US-A1- 2003 057 323
- US-A1- 2006 060 704
- US-A1- 2006 214 057
- US-A1- 2009 278 429

## Beschreibung

### TECHNISCHES GEBIET

Die Erfindung betrifft eine Anordnung zum Aufnehmen von Passagieren in einem Verkehrsmittel, die Verwendung einer derartigen Anordnung in einem Luftfahrzeug, sowie ein Luftfahrzeug mit einer Kabine und mindestens einer darin angeordneten derartigen Anordnung.

### HINTERGRUND DER ERFINDUNG

Ein wesentliches Ziel bei der Einrichtung von Passagierkabinen in Verkehrsmitteln ist häufig die Maximierung der zur Verfügung stehenden Anzahl von Passagiersitzen, die durch die Anzahl von vorgeschriebenen Sitzen für Besatzungsmitglieder eingeschränkt wird, weiterhin durch vorgeschriebene Sicherheitseinrichtungen, beliebige Versorgungseinrichtungen und Toiletten. Das Verhältnis der Anzahl von Passagiersitzen zu übrigen Einrichtungen in Passagierkabinen ist ein Faktor, der die Wirtschaftlichkeit eines Flugzeugs im Linienverkehr mitbestimmt. Neben behördlichen Vorschriften für Muster- und Betriebszulassung von Verkehrsmitteln sind bei Auswahl von Sitzgrößen, Sitzabständen, Versorgungseinrichtungen und Toiletten auch Kundenwünsche, beispielsweise kundenspezifische Sondereinbauten von Betreibern des Verkehrsmittels, mit einzubeziehen. Je nach Gestaltung von Einbauten in der Passagierkabine und deren Platzbedarf können intelligente Konstruktions- und Anordnungslösungen die Anzahl von Passagiersitzen optimieren.

Durch einen allgemeinen Trend, den durch mitgeführte Speisen und Getränke beanspruchten Raum innerhalb einer Passagierkabine vor allem im Kurz- und Mittelstreckenbereich zu reduzieren, können mitunter Bordküchen (Galleys) entfallen, deren Stellflächen für die Unterbringung von anderen Objekten genutzt werden können. Aufgrund der häufig in Türbereichen angeordneten Bordküchen könnte es empfehlenswert sein, an diesen zur Verfügung stehenden Bauräumen Objekte anzuordnen, die eine Unterbringung von bewegungseingeschränkten Personen erleichtern.

DE 198 27 275 C1 und US 6 273 366 B1 offenbaren eine Vorrichtung zum Transport von Kranken in einem Flugzeug, die innerhalb der Flugzeugpassagierkabine benachbart zu einem Türbereich angeordnet und als Patienten-Transporteinheit ausgebildet ist. DE 10 2007 009544 A1 zeigt ein medizinisches Versorgungsmodul neben zwei Passagiersitzen.

### ZUSAMMENFASSUNG DER ERFINDUNG

Es ist eine Aufgabe der Erfindung, eine Anordnung zum Aufnehmen von Passagieren für ein Verkehrsmittel anzugeben, die einen üblicherweise durch Bordküchen eingenommenen Bauraum möglichst effektiv für die Beherbergung oder Benutzung von Personen bereitstellt, insbesondere für bewegungseingeschränkte Personen, Personen mit erhöhtem Bedarf an Privatsphäre, erkrankte oder verletzte Personen und ähnliche und gleichzeitig die Wirtschaftlichkeit des Verkehrsmittels möglichst nicht einschränkt, sondern zusätzlich verbessert.

Die Aufgabe wird durch eine Anordnung zum Aufnehmen von Passagieren für ein Flugzeug mit den Merkmalen des unabhängigen Anspruchs 1 gelöst. Vorteilhafte Ausführungsformen und Weiterbildungen sind den Unteransprüchen zu entnehmen.

In einer vorteilhaften Ausführungsform weist die erfindungsgemäße Anordnung zum Aufnehmen von Passagieren in einem Flugzeug einen ersten Stellplatz, einen zweiten Stellplatz und einen dritten Stellplatz auf. Der erste Stellplatz, der zweite Stellplatz und der dritte Stellplatz sind nebeneinander auf einer gemeinsamen Stellfläche angeordnet, wobei zwei der Stellplätze jeweils mit einer modularen Aufnahmeeinheit zum Aufnehmen eines Passagiers ausgestattet sind und einer der Stellplätze mit eine Aufnahmeeinheit zum Aufnehmen eines Stauschranks ausgestattet ist. Die Stellfläche für alle drei Stellplätze entspricht dabei bevorzugt der Grundfläche einer Bordküche, die in einem nichtzylindrischen Abschnitt einer Passagierkabine angeordnet ist.

Eine derartige erfindungsgemäße Anordnung ermöglicht die individuelle Ausstattung eines üblicherweise nur durch eine Bordküche genutzten Bereichs innerhalb einer Passagierkabine eines Verkehrsmittels und insbesondere Flugzeugs. Dadurch kann in einem abgetrennten Teil einer Passagierkabine eine Möglichkeit zur Unterbringung besonderer Passagiere bereitgestellt werden. Die modularen Aufnahmeeinheiten können durch mehrere Objekte realisiert werden, die insbesondere Passagiersitze, Aufnahmeeinheiten für Rollstühle oder Liegen betreffen. Durch die Eignung zweier Stellplätze für Aufnahmeeinheiten von Passagieren kann etwa eine bewegungseingeschränkte Person zusammen mit einer Begleitperson untergebracht werden. Gleichzeitig wäre auch der Transport einer verletzten oder kranken Person denkbar, die von einer Begleitperson, einem Arzt oder einer Pflegekraft begleitet wird.

Bei Bedarf oder einer entsprechenden Betriebsvorschrift, den Rollstuhl einer bewegungseingeschränkten Person in der Passagierkabine während des Flugs oder der Fahrt mitzuführen, erlaubt die erfindungsgemäße Anordnung eine Unterbringung des Rollstuhls an einem der Stellplätze. Die erfindungsgemäße Anordnung erlaubt damit die gleichzeitige Aufnahme eines sitzenden Passagiers und eines in die Passagierkabine mitgeführten Rollstuhls, so dass der Transport einer bewegungseingeschränkten Person in dem betreffenden Verkehrsmittel gegenüber Verkehrsmitteln aus dem Stand der Technik deutlich vereinfacht wird. In Kabinen gängiger Verkehrsflugzeuge werden beispielsweise heutzutage keine eigenständigen Stellplätze oder Aufnahmeeinheiten zum Aufnehmen von mitgeführten Rollstühlen bereitgestellt, sondern es werden häufig für jeden mitzuführenden Rollstuhl zusätzlich mehrere Sitzplätze innerhalb der Kabine geopfert, um zusammengefaltete Rollstühle zwischen zwei Sitzreihen stellen zu können, damit der Rollstuhl nach der Landung des Flugzeugs einer bewegungseingeschränkten Person ohne weiteres zur Verfügung steht, damit dieser bequem die Passagierkabine verlassen kann. Das erfindungsgemäße Vorsehen einer dedizierten Aufnahmeeinheit für einen Rollstuhl neben einem normalen Sitzplatz bedeutet hingegen, dass im Fall des Mitführens einer bewegungseingeschränkten Person in dem Verkehrsmittel keine herkömmlichen Passagiersitze geopfert werden müssen, gleichzeitig das Mitführen und Befestigen des Rollstuhls deutlich erleichtert wird.

Die erfindungsgemäße Anordnung kann daher die Effizienz einer behindertengerecht ausgestatteten Kabine des Verkehrsmittels erhöhen, gleichzeitig entsteht, in Abhängigkeit von der Art und Ausführung der Aufnahmeeinheit für den Rollstuhl, nur ein sehr begrenztes Zusatzgewicht.

Der Begriff "Stellplatz" ist als ein Ort auf der Grundfläche der erfindungsgemäßen Anordnung zu verstehen, an dem ein Kabinenausrüstungsgegenstand angeordnet und befestigt werden kann. Ein Stellplatz könnte beispielsweise einen Passagiersitz, einen Stauschrank, einen Teil einer Liege und dergleichen aufnehmen und könnte weiterhin als eine Rastergröße innerhalb der Kabine verstanden werden.

Der Begriff "Aufnahmeeinheit" ist weiterhin so zu verstehen, dass diese Aufnahmeeinheit dazu dient, etwas für einen Transport vorübergehend aufzunehmen. Es könnte sich sowohl um Passagiere, Gepäck oder andere mitzuführende Dinge handeln, so dass eine Aufnahmeeinheit neben Passagiersitzen auch Stauschränke, Halte- oder Arretiervorrichtungen und dergleichen umfassen kann. Eine Aufnahmeeinheit zum Aufnehmen eines Rollstuhls kann auf verschiedenartige Weise realisiert werden, wie den nachfolgend aufgeführten Ausführungsformen zu entnehmen ist.

Der Begriff "Rollstuhl" ist der Einfachheit halber gewählt, um die Beschreibung der Erfindung anschaulicher zu gestalten. Es versteht sich von selbst, dass die erfindungsgemäße Anordnung auch das Mitführen anderer Formen von Geh- oder Fahrhilfen unterstützt.

In einer vorteilhaften Weiterbildung der erfindungsgemäßen Anordnung weist die Aufnahmeeinheit zum Aufnehmen eines Stauschranks einen Stauschrank auf, der ein erstes Staufach besitzt, das für die Aufnahme eines in Transportstellung zusammengelegten, gefalteten oder geklappten und in die Kabine gebrachten Rollstuhls dimensioniert ist. Wird eine bewegungseingeschränkte Person mit einem Rollstuhl in die Kabine des betreffenden Verkehrsmittels gebracht, kann die Person auf eine Aufnahmeeinheit für einen Passagier gesetzt oder gelegt werden. Der betreffende mitgeführte Rollstuhl könnte mit Hilfe einer Verriegelungseinrichtung von einer Gebrauchsstellung in eine Transportstellung versetzt werden, wobei die Transportstellung eine möglichst kompakte Unterbringung des betreffenden Rollstuhls erlauben soll. Der Stauschrank auf dem betreffenden Stellplatz sollte dann den zusammengelegten Rollstuhl aufnehmen. Beim Verlassen der Kabine kann die betreffende Person den Rollstuhl sofort wieder verwenden.

Gleichermaßen ist eine Aufnahmeeinheit für einen Passagier eine Arretiervorrichtung zum arretierten Haltern eines in Gebrauchsstellung befindlichen Rollstuhls. Falls es sich etwa um ein Verkehrsmittel handelt, welches nur kurze Strecken zurücklegt und der Aufwand des Besteigens und Verlassens des Verkehrsmittels sehr gering ist, könnte eine bewegungseingeschränkte Person auch auf einem mitgeführten Rollstuhl in die Passagierkabine des Verkehrsmittels gebracht werden, der dort in eine geeignete Arretiervorrichtung eingefahren wird. Die Arretiervorrichtung ist dabei dazu eingerichtet, mit Hilfe von kraft- und formschlüssigen Haltevorrichtungen den Rollstuhl so zu umklammern oder festzuklemmen, dass im Rahmen der üblichen Auslegung des Verkehrsmittels der Halt des arretierten Rollstuhls dem Halt üblicher Passagiersitze entspricht. Es ist dann darauf zu achten, dass der Rollstuhl auch eine Anschnallvorrichtung aufweist, die mindestens mit den Anschnallvorrichtungen der üblichen Passagiersitze vergleichbar ist.

In einer vorteilhaften Weiterbildung der Erfindung ist auf dem ersten und dem dritten Stellplatz jeweils ein Passagiersitz angeordnet, wobei auf dem zweiten Stellplatz ein Stauschrank mit einem ersten Staufach angeordnet ist. Der zweite Stellplatz befindet sich an einer seitlichen Begrenzung der Anordnung, während der erste Stellplatz zu dem Stauschrank benachbart ist. In dieser Anordnung können eine bewegungseingeschränkte Person und eine Begleitperson nebeneinander auf herkömmlichen Passagiersitzen sitzen, während der Rollstuhl in Transportstellung zusammengelegt in einem ersten Staufach des seitlich angeordneten Staufachs platzsparend untergebracht wird.

In einer vorteilhaften Weiterbildung ist ein vierter Stellplatz vorhanden, der von dem ersten, dem zweiten und dem dritten Stellplatz beabstandet angeordnet ist und ferner dazu eingerichtet ist, ein Trennelement aufzunehmen. Dies dient vor allem dem Schutz der Privatsphäre der Personen, die sich in der erfindungsgemäßen Anordnung befinden, denn das Trennelement könnte in Form einer räumlich fest positionierten Trennwand oder in Form einer lamellenartigen längen- bzw. breitenvariablen Variante ausgeführt werden, so dass die Sicht der anderen Passagiersitzen auf die erfindungsgemäße Anordnung und die darin befindlichen Passagiere verhindert werden kann.

In einer Weiterbildung erstreckt sich der vierte Stellplatz von Position, die von den ersten drei Stellplätzen beabstandet ist, bis zu mindestens einem der ersten drei Stellplätze und ist dazu eingerichtet, eine räumliche Trenneinrichtung aufzunehmen. Dadurch können mindestens zwei Seiten der erfindungsgemäßen Anordnung von einer Trenneinrichtung umgeben werden, um einen optischen Sichtschutz zu gewährleisten.

Diese Weiterbildung kann durch den optisch abgetrennten Bereich auch zur Aufnahme besonders bekannter Persönlichkeiten dienen, die auf Einhaltung ihrer Privatsphäre bestehen. Vorzugsweise könnten hierfür in der erfindungsgemäßen befindliche Passagiersitze mit der Sitzfläche zu dem vierten Stellplatz gerichtet angeordnet werden, so dass die erfindungsgemäße Anordnung mindestens zu einer oder zwei Seiten durch das Trennelement und zu einer anderen Seite durch Rückenlehnen der betreffenden Passagiersitze optisch abgetrennt sind.

Die optische Abtrennung ist nicht unbedingt notwendig, so dass bei herkömmlichem Betrieb des Fahrzeugs eine kleine Sitzgruppe entstehen kann, die zwei herkömmliche Passagiersitze auf dem zweiten und dritten Stellplatz der erfindungsgemäßen Anordnung ebenso umfasst wie eine in Flugrichtung weisende Passagiersitzgruppe, die gegenüber der erfindungsgemäßen Anordnung positioniert ist. Dies ist ideal für kleine Reisegruppen oder Familien.

Gleichermaßen kann in einer vorteilhaften Weiterbildung der erfindungsgemäßen Anordnung auf mindestens einem Stellplatz ein Liegeelement zur liegenden Lagerung eines Passagiers angeordnet werden, das sich durch Abklappen, Auflegen oder dergleichen auf einen Passagiersitz eines benachbarten Stellplatzes erstrecken oder durch ein weiteres Liegeelement auf einem benachbarten Stellplatz ergänzen könnte. Insbesondere in Verbindung mit einem geeigneten Trennelement auf einem vierten Stellplatz kann dadurch eine Art Mini-Suite realisiert werden oder zumindest eine besonders großzügige Schlafgelegenheit für mindestens eine Person, die ein angenehmes Reisen erlaubt. Die Aufnahmeeinheit, die zum Aufnehmen eines Stauschranks eingerichtet ist, könnte in dieser Anordnung unbestückt bleiben, so dass auf den beiden verbliebenen Stellplätzen ausreichend Platz vorhanden ist. Eine derartige Anordnung eignet sich weiterhin sehr gut für Krankentransporte.

In einer erfinderischen Ausführungsform, bei dem ein Stellplatz mit einem Stauschrank mit einem ersten Staufach zum Aufnehmen eines Rollstuhls ist ein zweites Staufach bevorzugt unterhalb des ersten Staufachs angeordnet, um die Aufnahme eines Servierwagens ("Trolleys") zu erlauben. Dadurch wird eine besonders effektive Nutzung des Raums in der Passagierkabine ermöglicht, insbesondere dann, wenn die Grundfläche, auf der die
Anordnung positioniert ist, ursprünglich für die Aufnahme einer Bordküche vorgesehen war. Wie eingangs erwähnt, besteht der Trend, auf Kurz- und Mittelstreckenflügen in Flugzeugen heutzutage nur wenig Bauraum innerhalb einer Passagierkabine eines Flugzeugs oder anderen Verkehrsmittels mit Lebensmitteln und Getränken zu beaufschlagen, etwa durch Optimierung von Lebensmittelverpackungen, der Auslagerung von Stauraum außerhalb der Kabine oder dergleichen. Eine eigens hierfür vorgesehene Bordküche wäre überdimensioniert, so dass beispielsweise ein Stellplatz für einen einzigen oder sehr wenige Servierwagen ausreichen würde, um die Lebensmittel innerhalb der Kabine zu transportieren. Durch Anordnen eines einzelnen zweiten Staufachs zum Aufnehmen eines Servierwagens im Bereich einer Eingangstür des betreffenden Verkehrsmittels kann diesem Umstand gerecht werden.

Die Aufgabe wird gemäß der oben angeführten Beschreibung weiter durch ein Flugzeug mit einer Passagierkabine gelöst, die mindestens eine Tür zum Besteigen oder Verlassen der Passagierkabine aufweist und eine Anordnungsgrundfläche in einem türnahen Bereich zum Aufnehmen einer erfindungsgemäßen Anordnung aufweist.

Bevorzugt ist diese Anordnungsgrundfläche in einem in Flugrichtung vorderen oder hinteren Bereich der Passagierkabine angeordnet, in dem sich der Querschnitt der Passagierkabine von einer rein zylindrischen Form zum Bugbereich bzw. zum Heckbereich hin verjüngt. Die Breite dieser Anordnungsgrundfläche ist demnach geringer als die Breite einer herkömmlichen Sitzreihe, die sich in einem zylindrischen Rumpfabschnitt der Passagierkabine befindet. Dies führt dazu, dass die betreffende Anordnungsgrundfläche nicht die gleiche Anzahl an Passagiersitzen aufnehmen kann, die in einem rein zylindrischen Bereich des Flugzeugrumpfes angeordnet sind. Aus diesem Grunde wird dieser Bereich in gängigen Verkehrsflugzeugen bevorzugt durch eine Bordküche beansprucht, die aufgrund der vorangehend dargelegten Ausführung entfallen kann, so dass die erfindungsgemäße Anordnung dort Platz finden könnte.

Schließlich kann auch die Verwendung einer erfindungsgemäßen Anordnung in einem Flugzeug als eine Lösung der Aufgabe angesehen werden.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte.

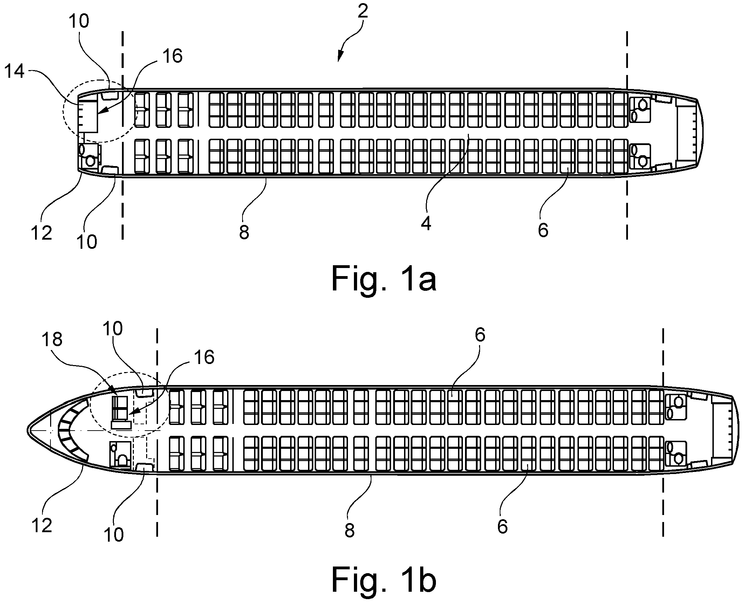

Fig. 1a und 1b zeigen eine Passagierkabine eines Kurz- und Mittelstreckenflugzeugs mit einer in einem Türbereich angeordneten Bordküche (Fig. 1a) und einer im Türbereich angeordneten erfindungsgemäßen Anordnung (Fig. 1b).
Fig. 2 zeigt ein erstes Ausführungsbeispiel der erfindungsgemäßen Anordnung.
Fig. 3 zeigt ein zweites Ausführungsbeispiel der erfindungsgemäßen Anordnung.
Fig. 4 zeigt ein drittes Ausführungsbeispiel der erfindungsgemäßen Anordnung.
Fig. 5 zeigt ein viertes Ausführungsbeispiel der erfindungsgemäßen Anordnung.
Fig. 6 zeigt ein fünftes Ausführungsbeispiel der erfindungsgemäßen Anordnung.
Fig. 7 zeigt ein sechstes Ausführungsbeispiel der erfindungsgemäßen Anordnung.
Fig. 8 zeigt das erste Ausführungsbeispiel in einer dreidimensionalen Ansicht.

### DETAILLIERTE DARSTELLUNG EXEMPLARISCHER AUSFÜHRUNGSFORMEN

Fig. la zeigt einen Ausschnitt eines Flugzeugs 2 mit einer darin angeordneten Passagierkabine 4, in der eine Reihe von Passagiersitzen 6 in einer Zwei-Klassen-Verteilung angeordnet sind. Die Passagiersitze 6 erstrecken sich in einem Bereich der Passagierkabine 4, die durch einen rein zylindrisch geformten Rumpfabschnitt 8 begrenzt wird. In einem in Flugrichtung weisenden vorderen Bereich sind zu beiden Seiten der Passagierkabine 4 Türen 10 angeordnet, die in einem Rumpfabschnitt 12 liegen, der nicht vollständig zylindrisch ausgeführt ist. In einem türnahen Bereich befindet sich üblicherweise eine Bordküche 14, deren Stauvolumen besonders bei Kurz- und Mittelstreckenflügen auch in Bereiche des Rumpfes ausgelagert werden könnte, die außerhalb der eigentlichen Passagierkabine liegen oder deren notwendiges Stauvolumen durch Verringerung der Verpackungsgrößen und/oder durch Reduktion der Menge an mitgeführten Lebensmitteln durch alternative Unterbringungsmöglichkeiten entfallen könnte.

Erfindungsgemäß kann eine Stellfläche 16, die üblicherweise von der Bordküche 14 beansprucht wird, mit einer erfindungsgemäßen Anordnung 18 bestückt werden. Durch die Nähe zu einer Tür 10 kann die erfindungsgemäße Anordnung 18 das Einsteigen von bewegungseingeschränkten Personen sehr stark erleichtern, da diese nicht in die eigentliche Passagierkabine 4 gebracht werden müssen, sondern direkt neben der Tür einen Platz finden können. Weiterhin ist der zurückzulegende Weg von erkrankten oder verletzten Personen oder bekannten und auf Privatsphäre bedachten Persönlichkeiten von einem Einsteigebereich an der Tür 10 zu einem Sitz oder einer Liege sehr kurz. Die detaillierte Ausführung der erfindungsgemäßen Anordnung 18 wird anhand der nachfolgenden Figuren näher erläutert.

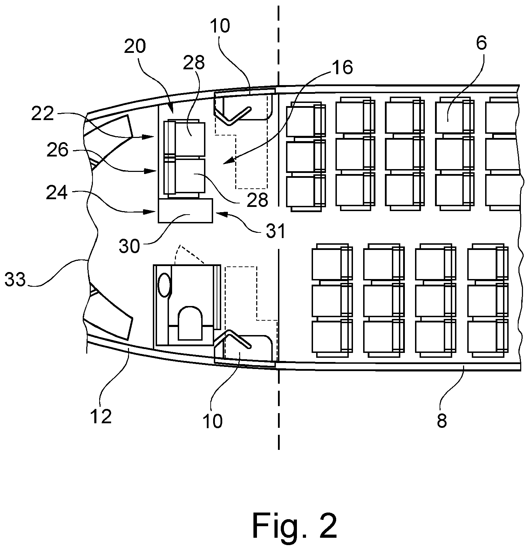

Fig. 2 zeigt ein erstes Ausführungsbeispiel einer erfindungsgemäßen Anordnung 20, mit einem ersten Stellplatz 22, einem zweiten Stellplatz 24 und einem dritten Stellplatz 26, die benachbart zueinander angeordnet sind und auf einer gemeinsamen Stellfläche 16 stehen. Die erfindungsgemäße Anordnung 20 befindet sich in einem Bereich, der nahe an einer Eingangstür 10 positioniert ist.

Der erste Stellplatz 22 weist einen Passagiersitz 28 auf, der entgegen der Flugrichtung gedreht ist. Auf dem zweiten Stellplatz 24 ist ein Stauschrank 30 mit einem ersten Staufach 31 angeordnet, das zum Aufnehmen eines in der Passagierkabine 4 mitführbaren und in Transportstellung zusammengelegten Rollstuhls dimensioniert ist. Auf dem dritten Stellplatz 26 ist ebenfalls ein Passagiersitz 28 angeordnet, der benachbart zu dem Passagiersitz 28 des ersten Stellplatzes 22 positioniert ist. Die erfindungsgemäße Anordnung 20 eignet sich besonders zur Aufnahme bewegungseingeschränkter Personen, da der Weg von der Eingangstür 10 zu dem Passagiersitz 28 auf dem ersten Stellplatz 22 und auf dem dritten Stellplatz 26 sehr kurz ist und die Stellfläche 16 aufgrund der nicht zylindrischen, sondern sich verjüngenden Form des Flugzeugrumpfabschnitts 12 keinen ausreichenden Bauraum zur Unterbringung von drei Passagiersitzen 28 bieten würde, die hingegen in einem zylindrischen Rumpfabschnitt 8 angeordnet werden können.

Die beiden Passagiersitze 28 auf den ersten und zweiten Stellplätzen 22 und 26 bieten ausreichend Platz für eine bewegungseingeschränkte Person sowie eine Begleitperson, die beispielsweise beim Umsetzen einer Person von einem Rollstuhl auf einen Passagiersitz 28 behilflich sein kann. Aufgrund der Begrenzung zu einem Cockpit 33 sind die Passagiersitze 28 entgegen der Flugrichtung ausgerichtet. Dies ist jedoch nützlich, da bewegungseingeschränkte Personen im Falle einer Notlandung oder dergleichen nicht eine nach vorn gebeugte Notfallposition einnehmen müssen, da sie aufgrund der bei der Notlandung auftretenden Trägheitskräfte an die Rückenlehne gedrückt werden, so dass keine große Kraftanstrengung erforderlich ist.

Weiterhin ist die Ausrichtung entgegen der Flugrichtung besonders nützlich, um ein möglichst leichtes Umsetzen von einem Eintrittsbereich vor der Eingangstür 10 zu einem Passagiersitz 28 zu ermöglichen, da mit einem Rollstuhl nicht um einen Passagiersitz 28 herumgefahren oder zu Fuß gelaufen werden muss, sondern direkt im Bereich vor der Tür 10 mit einer kleinen Drehung in den Passagiersitz 28 gelangt werden kann.

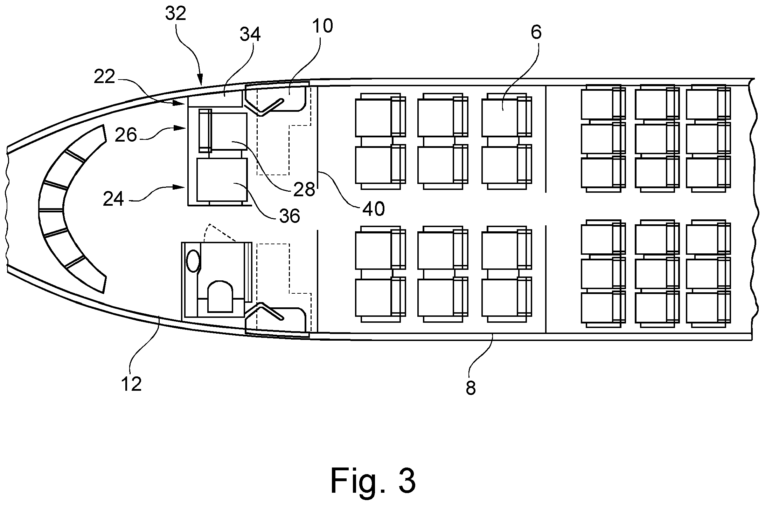

Fig. 3 zeigt in einem weiteren Ausführungsbeispiel einer erfindungsgemäßen Anordnung 32 eine leicht abgewandelte Variante im Vergleich zu Fig. 2. Auf dem dritten Stellplatz 26 ist ein Passagiersitz 28 angeordnet, auf dem zur Wandung des Flugzeugrumpfabschnitts 12 gerichteten Seite gerichteten ersten Stellplatz 22 ein Stauschrank 34 und auf dem zu einem Gang gerichteten Seite befindlichen zweiten Stellplatz 24 eine Arretiervorrichtung 36 für einen Rollstuhl. Die Arretiervorrichtung 36 erlaubt, einen Rollstuhl vollständig in einer Gebrauchsposition aufzunehmen und zu verriegeln, was insbesondere bei Kurzstreckenflügen sinnvoll erscheint, wenn der Aufwand des Umsetzens, Zusammenfaltens des Rollstuhls und Verstauens in einem Gepäckabteil bzw. einem Frachtraum nicht notwendig erscheint. Dies könnte sich insbesondere auch in anderen Nahverkehrsmitteln anbieten, beispielsweise Bussen oder Bahnen. Der an dem ersten Stellplatz 22 angeordnete Stauschrank 34 muss aus diesem Grunde nicht dafür eingerichtet sein, einen zusammengefalteten Rollstuhl aufzunehmen, da der Rollstuhl in der Arretiervorrichtung 36 positioniert ist und in dieser Positionierung auch darauf gesessen werden kann.

Weiterhin befindet sich im Bereich der Eingangstür 10 ein vierter Stellplatz 38, auf dem ein Trennelement 40 angeordnet werden könnte, um einen optischen Sichtschutz zu gewährleisten. Den Passagieren auf dem zweiten und dritten Stellplatz 24 bzw. 26 wird somit ein Schutz ihrer Privatsphäre bereitgestellt, was besonders aufgrund einer optional entgegen der Flugrichtung orientierten Lage des Passagiersitzes 28 und der Arretiervorrichtung 36 sinnvoll ist.

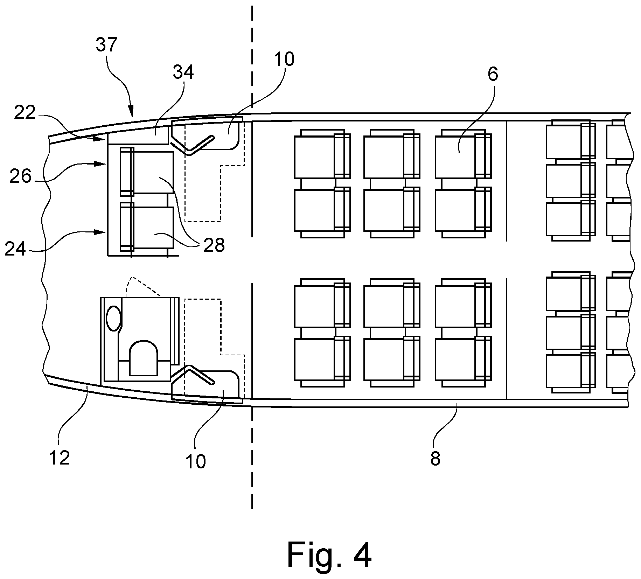

In Fig. 4 wird ein drittes Ausführungsbeispiel einer erfindungsgemäßen Anordnung 37 gezeigt, bei dem auf dem zweiten und dritten Stellplatz 24 und 26 jeweils ein Passagiersitz 28 angeordnet ist, die wie in Fig. 2 für die Unterbringung von Passagieren, das heißt einem bewegungseingeschränkten Passagier und eine Begleitperson, gedacht sind, wobei ein auf dem zweiten Stellplatz 24 angeordneter Stauschrank 34 zum Mitführen persönlicher Gegenstände von Passagieren auf dem zweiten Stellplatz 24 und dritten Stellplatz 26 eingerichtet ist.

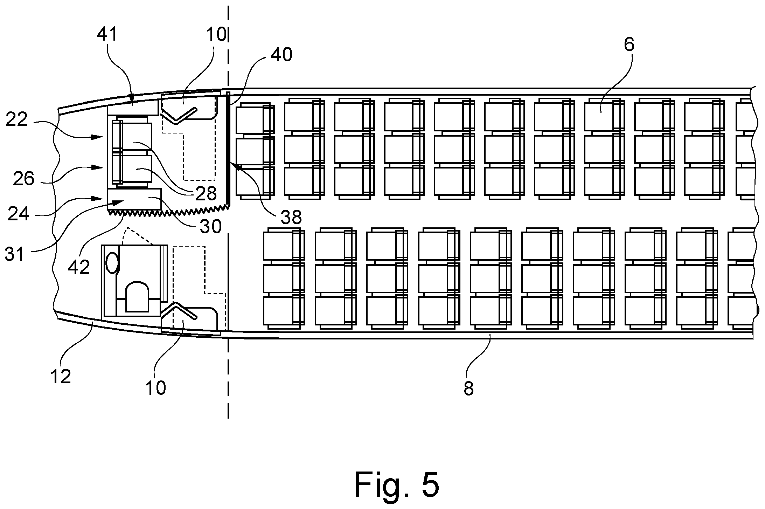

In Fig. 5 wird ein weiteres Ausführungsbeispiel einer erfindungsgemäßen Anordnung 41 gezeigt, das im Wesentlichen dem Ausführungsbeispiel aus Fig. 2 entspricht. Zusätzlich hierzu ist an dem dritten Stellplatz 38 ein Trennelement 40 angeordnet, welches einen ausziehbaren Vorhang 42 aufweist, der an einer Längsseite der Anordnung 41 entlanggezogen werden kann und sich dann bis in den zweiten Stellplatz 24 hinein erstreckt. Durch die Kombination aus Vorhang 42 und Trennelement 40 kann ein geschlossener Raum mit einem hohen Maß an Privatsphäre bereitgestellt werden, der sich in einen Einstiegsbereich erstreckt, der sonst üblicherweise während des Flugs nicht benutzt wird. Dies ermöglicht weiterhin, dass die gesamte Passagierkabine 4 mit Passagieren belegt werden kann, um dann den Vorhang 42 zu schließen und etwa ein unbemerktes Einsteigen einer bekannten Persönlichkeit zu ermöglichen, was eine deutliche Steigerung der Privatsphäre gegenüber allen bekannten Passagierflugzeugen erlaubt.

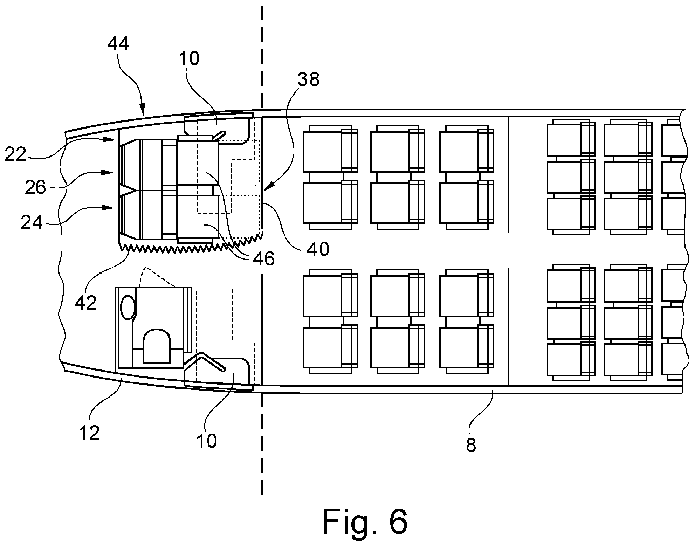

Fig. 6 zeigt eine leichte Abwandlung des in Fig. 5 gezeigten Ausführungsbeispiels, in Form einer erfindungsgemäßen Anordnung 44, die insbesondere zur Gewährleistung einer Privatsphäre bei großzügigeren Sitzmöglichkeiten mit Passagiersitzen 46 gedacht ist. Der erste Stellplatz kann aufgrund des modularen Konzepts leer bleiben, so dass der zweite Stellplatz 24 und der dritte Stellplatz 26 mit größeren Passagiersitzen 46 ausrüstbar sein können.

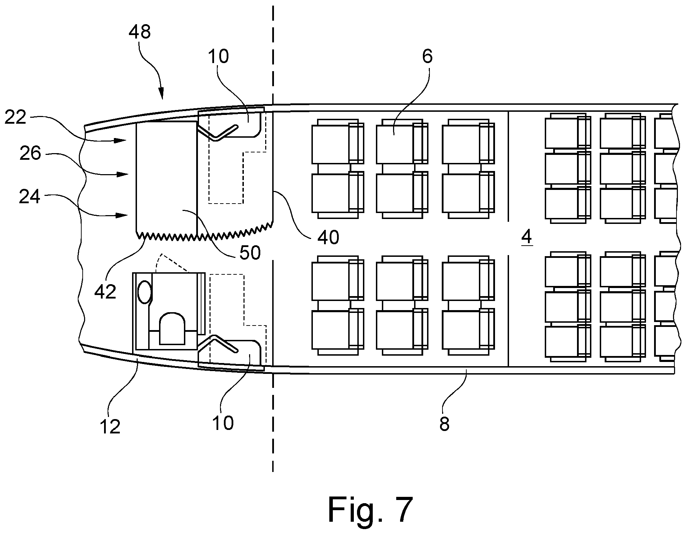

Fig. 7 zeigt ein weiteres Ausführungsbeispiel einer erfindungsgemäßen Anordnung 48, bei dem sämtliche Stellplätze 22, 24 und 26 mit einer Liege 50 beaufschlagt sind, die durch ein Trennelement 40 und einen Vorhang 42 nach außen hin optisch abgeschirmt ist. Dies erlaubt einen ungestörten Krankentransport innerhalb einer herkömmlichen Passagierkabine, die mit einer erfindungsgemäßen Anordnung 48 ausgerüstet ist, ohne dass für den Krankentransport ein deutlich teureres Verkehrsmittel eingesetzt werden muss.

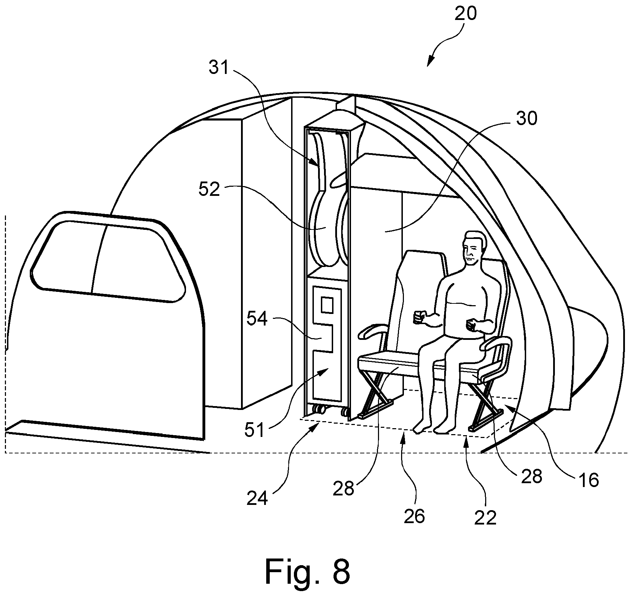

Schließlich zeigt Fig. 8 in einer dreidimensionalen Ansicht das erste Ausführungsbeispiel einer erfindungsgemäßen Anordnung 20 gemäß Fig. 2, bei dem zwei Passagiersitze 28 vorhanden sind, die auf einer zum Gang der Passagierkabine gerichteten Seite durch einen Stauschrank 30 begrenzt werden, der ein erstes Staufach 31 und ein zweites Staufach 51 aufweist, wobei das erste Staufach derart dimensioniert ist, dass ein in Transportstellung befindlicher Rollstuhl 52 vollständig aufgenommen werden kann. Das zweite Staufach 51 könnte gemäß diesem Ausführungsbeispiel dazu eingerichtet sein, einen Servierwagen 54 aufzunehmen, mit dessen Hilfe Speisen und Getränke in der Passagierkabine ausgegeben werden können. Das erste Staufach 31 sollte zur Aufnahme von üblichenRollstühlen Abmessungen von 13 x 36 x 42 Zoll aufweisen.

Ergänzend sei darauf hinzuweisen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen und anderen oben beschriebenen Ausführungsbeispielen verwendet werden können. Bezugszeichen in den Ansprüchen sind nicht als Einschränkung anzusehen.

### BEZUGSZEICHEN

- 2: Flugzeug
- 4: Passagierkabine
- 6: Passagiersitz
- 8: zylindrischer Rumpfabschnitt
- 10: Tür
- 12: nicht zylindrischer Rumpfabschnitt
- 14: Bordküche
- 16: Stellfläche
- 18: Anordnung
- 20: Anordnung
- 22: erster Stellplatz
- 24: zweiter Stellplatz
- 26: dritter Stellplatz
- 28: Passagiersitz
- 30: Stauschrank
- 31: erstes Staufach
- 32: Anordnung
- 33: Cockpit
- 34: Stauschrank
- 36: Arretiervorrichtung
- 37: Anordnung
- 38: vierter Stellplatz
- 40: Trennelement
- 41: Anordnung
- 42: Vorhang
- 44: Anordnung
- 46: Passagiersitz
- 48: Anordnung
- 50: Liege
- 51: zweites Staufach
- 52: Rollstuhl
- 54: Servierwagen (Trolley)

## Patentansprüche

1. Flugzeug (2) mit mindestens einer Passagierkabine (4) und mindestens einer darin angeordneten modularen Anordnung (20, 32, 37, 41, 44, 48) zum Aufnehmen von Passagieren in einer Kabine (4) des Flugzeugs, wobei die modulare Anordnung aufweist:
- eine gemeinsame Stellfläche (16),
- einen ersten Stellplatz (22),
- einen zweiten Stellplatz (24) und
- einen dritten Stellplatz (26),
wobei der erste Stellplatz, der zweite Stellplatz und der dritte Stellplatz nebeneinander auf der Stellfläche angeordnet sind, zwei der Stellplätze jeweils mit einer Aufnahmeeinheit (28, 36, 46, 50) zum Aufnehmen eines Passagiers ausgestattet sind und einer der Stellplätze dazu eingerichtet ist, einen Stauschrank (30, 34) aufzunehmen;
**dadurch gekennzeichnet, dass** der Stauschrank (30) ein erstes Staufach (31) aufweist, das zum Aufnehmen eines in Transportstellung zusammengelegten Rollstuhls (52) dimensioniert ist; wobei der Stauschrank (30) ein zweites Staufach (51) aufweist, das zum Aufnehmen eines Servierwagens (54) eingerichtet ist;
wobei die modulare Anordnung in einem Einstiegsbereich an einer Tür (10) positioniert ist.

2. Flugzeug nach Anspruch 1,
wobei die Aufnahmeeinheit zum Aufnehmen eines Passagiers eine Arretiervorrichtung (36) zum arretierten Haltern eines in Gebrauchsstellung befindlichen Rollstuhls (52) ist.

3. Flugzeug nach Anspruch 1,
wobei auf dem ersten Stellplatz (22) und dem dritten Stellplatz (26) ein Passagiersitz (28) und auf dem zweiten Stellplatz (24) ein Stauschrank (30) angeordnet ist.

4. Flugzeug nach Anspruch 1,
ferner aufweisend einen vierten Stellplatz (38), der von dem ersten Stellplatz (22), dem zweiten Stellplatz (24) und dem dritten Stellplatz (26) beabstandet angeordnet ist und ein Trennelement (40) aufweist.

5. Flugzeug nach Anspruch 4,
ferner aufweisend einen Vorhang (42), der sich von dem Trennelement (40) zu einem der ersten drei Stellplätze (22, 24, 26) erstreckt.

6. Flugzeug nach einem der vorhergehenden Ansprüche,
aufweisend eine Liege (50) auf mindestens einem Stellplatz (22, 24, 26), die sich auf mindestens einen benachbarten Stellplatz (22, 24, 26) erstreckt.

## Claims

1. Aircraft (2) comprising at least one passenger cabin (4) and at least one modular arrangement (20, 32, 37, 41, 44, 48), which is arranged in said passenger cabin, for accommodating passengers in a cabin (4) of the aircraft, wherein the modular arrangement has:
- a common floor area (16),
- a first floor space (22),
- a second floor space (24) and
- a third floor space (26),
wherein the first floor space, the second floor space and the third floor space are arranged next to one another on the floor area, two of the floor spaces are each equipped with an accommodation unit (28, 36, 46, 50) for accommodating a passenger and one of the floor spaces is designed to accommodate a storage locker (30, 34);
**characterized in that**
the storage locker (30) has a first storage compartment (31) which is dimensioned to accommodate a wheelchair (52) which is folded into the transportation position; wherein the storage locker (30) has a second storage compartment (51) which is designed to accommodate a serving trolley (54);
wherein the modular arrangement is positioned in an entry region to a door (10).

2. Aircraft according to Claim 1,
wherein the accommodation unit for accommodating a passenger is a locking apparatus (36) for holding a wheelchair (52) locked in its use position.

3. Aircraft according to Claim 1,
wherein a passenger seat (28) is arranged on the first floor space (22) and the third floor space (26) and a storage locker (30) is arranged on the second floor space (24) .

4. Aircraft according to Claim 1,
further having a fourth floor space (38) which is arranged at a distance from the first floor space (22), the second floor space (24) and the third floor space (26) and has a partition element (40).

5. Aircraft according to Claim 4,
further having a curtain (42) which extends from the partition element (40) to one of the first three floor spaces (22, 24, 26).

6. Aircraft according to one of the preceding claims, having a bed (50) on at least one floor space (22, 24, 26), which bed extends onto at least one adjacent floor space (22, 24, 26).

## Revendications

1. Avion (2) avec au moins une cabine de passagers (4) et au moins un arrangement modulaire (20, 32, 37, 41, 44, 48) agencé dans celle-ci pour recevoir des passagers dans une cabine (4) de l'avion, dans lequel l'arrangement modulaire présente:
- une surface de plancher commune (16),
- un premier emplacement (22),
- un deuxième emplacement (24), et
- un troisième emplacement (26),
dans lequel le premier emplacement, le deuxième emplacement et le troisième emplacement sont disposés l'un à côté de l'autre sur la surface de plancher, deux des emplacements sont équipés respectivement d'une unité de réception (28, 36, 46, 50) destinée à accueillir un passager et un des emplacements est configuré pour recevoir un placard de rangement (30, 34),
**caractérisé en ce que** le placard de rangement (30) présente un premier compartiment de rangement (31), qui est dimensionné de façon à héberger un fauteuil roulant (52) replié en position de transport;
dans lequel le placard de rangement (30) présente un deuxième compartiment de rangement (51), qui est conçu de façon à héberger un chariot de service (54);
dans lequel l'arrangement modulaire est positionné dans une zone d'accès près d'une porte (10).

2. Avion selon la revendication 1, dans lequel l'unité de réception destinée à accueillir un passager est un dispositif de blocage (36) destiné à maintenir en position bloquée un fauteuil roulant (52) se trouvant en position d'utilisation.

3. Avion selon la revendication 1, dans lequel un siège de passager (28) est installé sur le premier emplacement (22) et sur le troisième emplacement (26) et un placard de rangement (30) est installé sur le deuxième emplacement (24).

4. Avion selon la revendication 1, présentant en outre un quatrième emplacement (38), qui est disposé à distance du premier emplacement (22), du deuxième emplacement (24) et du troisième emplacement (26) et qui présente un élément de séparation (40).

5. Avion selon la revendication 4, présentant en outre un rideau (42), qui s'étend depuis l'élément de séparation (40) jusqu'à un des trois premiers emplacements (22, 24, 26).

6. Avion selon l'une quelconque des revendications précédentes, présentant une couchette (50) sur au moins un emplacement (22, 24, 26), qui s'étend sur au moins un emplacement voisin (22, 24, 26).
